# EUROPEAN PATENT SPECIFICATION

(11) **EP 2 634 605 B1**
(45) Date of publication and mention of the grant of the patent: **28.10.2015**
(21) Application number: 12157552.6
(22) Date of filing: 29.02.2012
(51) Int. Cl.: G02B 1/00, G02B 6/34

(54) **A diffractive coupling grating for perpendicular coupling**
Diffraktives Kopplungsgitter zur Vertikalkopplung
Réseau de couplage par diffraction permettant un couplage perpendiculaire

(43) Date of publication of application: 04.09.2013
(73) Proprietor: Huawei Technologies Co., Ltd., Longgang District Shenzhen, Guangdong 518129 (CN)
(72) Inventor: Taillaert, Dirk, 9000 Gent (BE); Collins, Tom, 9051 Sint-Denijs-Westrem (BE)
(74) Representative: Körber, Martin Hans

(56) References cited:
- EP-A1- 1 855 131
- TAILLAERT D ET AL: "AN OUT-OF-PLANE GRATING COUPLER FOR EFFICIENT BUTT-COUPLING BETWEEN COMPACT PLANAR WAVEGUIDES AND SINGLE-MODE FIBERS", IEEE JOURNAL OF QUANTUM ELECTRONICS, IEEE SERVICE CENTER, PISCATAWAY, NJ, USA, vol. 38, no. 7, 1 July 2002 (2002-07-01), pages 949-955, XP001169039, ISSN: 0018-9197, DOI: 10.1109/JQE.2002.1017613
- XIA CHEN ET AL: "Nanoholes Grating Couplers for Coupling Between Silicon-on-Insulator Waveguides and Optical Fibers", IEEE PHOTONICS JOURNAL, IEEE, USA, vol. 1, no. 3, 1 September 2009 (2009-09-01), pages 184-190, XP011328068, ISSN: 1943-0655, DOI: 10.1109/JPHOT.2009.2031685
- HALIR R ET AL: "Single etch fibre-to-chip grating couplers for high-volume production in SOI", INFORMATION PHOTONICS (IP), 2011 ICO INTERNATIONAL CONFERENCE ON, IEEE, 18 May 2011 (2011-05-18), pages 1-2, XP031892939, DOI: 10.1109/ICO-IP.2011.5953786 ISBN: 978-1-61284-315-5

## Description

### Field of the Invention

The present invention generally relates to out-of-plane coupling of light between an integrated waveguide, i.e. a waveguide that forms a layer in an integrated photonic circuit, and an optical source or optical receiver. The optical source can for instance be a Vertical-Cavity Surface-Emitting Laser or VCSEL. The optical receiver can for instance be an optical fibre wherein the light must be coupled. The invention in particular concerns perpendicular out-of-plane coupling with reduced coupling loss, i.e. coupling the light in or out of the waveguide under an angle of 90 degrees with increased efficiency.

### Background of the Invention

The article "An Out-of-Plane Grating Coupler for Efficient Butt-Coupling Between Compact Planar Waveguides and Single-Mode Fibers", from the authors D. Taillaert, W. Bogaerts, P. Bientsman, T. F. Kraus, P. Van Daele, I. Moerman, S. Verstuyft, K. De Mesel, R. Baets, published in the IEEE Journal of Quantum Electronics, Vol. 38, No. 7, July 2002, pages 949-955, describes the best known solution for perpendicular out-of-plane coupling between an integrated waveguide and an optical fibre. The solution consists of a second order coupling grating, a phase delay section, and a reflector grating. The structure is illustrated in Fig. 8 a) of the IEEE article from D. Taillaert et al. and may eventually be combined with a multilayer reflector underneath as shown in Fig. 8 b).

In the known solution from D. Taillaert et al., the second order coupling grating requires a shallow etch to make it sufficiently weak to avoid reflections. Further, the tolerance on the distance between the second order coupling grating and the reflector grating, i.e. the tolerance on the length of the phase delay section, is extremely tight. Therefore, the second order coupling grating and the reflector grating must be etched using a single mask. Unfortunately, this implies that also the reflector grating must be made using a shallow etch. Further, it turns out that the phase delay is dependent on the depth of the shallow etch. The etch control of a shallow etch however is too poor to meet the required tolerance in the phase delay.

Attempts to manufacture a perpendicular coupling grating with second order grating, phase delay section and reflector grating wherein the reflector grating is made in a different etch step using an etch step completely through the waveguide layer instead of a shallow etch, fails as the alignment tolerance from one layer to another is insufficient to meet the distance tolerance requirement.

The article "Characterization of Silicon-on-Insulator Waveguide Chirped Grating for Coupling to a Vertical Optical Fiber" from the authors X. Chen, C. Li and H. K. Tsang, published in 2008 IEEE/LEOS International Conference on Optical Mems and Nanophotonics, pages 56-57, describes a perfectly perpendicular grating coupler based on a linearly chirped waveguide grating that suppresses back reflections in the waveguide, and consequently improves coupling into an optical fibre. The linearly chirped grating requires a shallow etch (see paragraph 2, 6th line) suffering tolerance related disadvantages similar to the solution known from D. Taillaert et al. The article further mentions on page 57 that only a maximum coupling efficiency around 32 % is achievable.

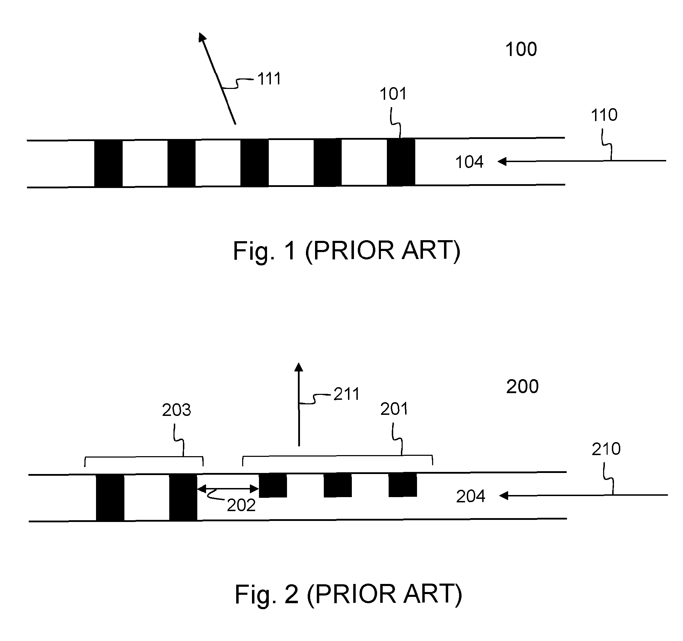

The article "Nanoholes grating couplers for coupling between Silicon-On-Insulator waveguides and optical fibers" from the authors X. Chen, and H. K. Tsang, published in IEEE Photonics Journal, Vol. 1, No. 3, pages 184-190, in 2009, describes grating couplers formed by an array of nanoholes fabricated in the same deep-etch as used for defining the silicon waveguides, thus reducing the number of masks and fabrication steps. However, the design of the grating couplers follows a "conventional" approach for grating couplers, i.e. that "the coupling fibre is oriented at an angle of 8° off vertical in the x-z plane defined by the surface normal (z-axis) of SOI wafer and the waveguide direction (x-axis) in order to minimize second order Bragg reflection, which would otherwise limit the performance of the grating coupler" (p. 186, 1 st paragraph, and on p. 185, Fig. 1(a)). The article therefore does not address perpendicular out-of-plane coupling with reduced coupling loss, i.e. coupling the light in or out of the waveguide under an angle of 90 degrees with increased efficiency.

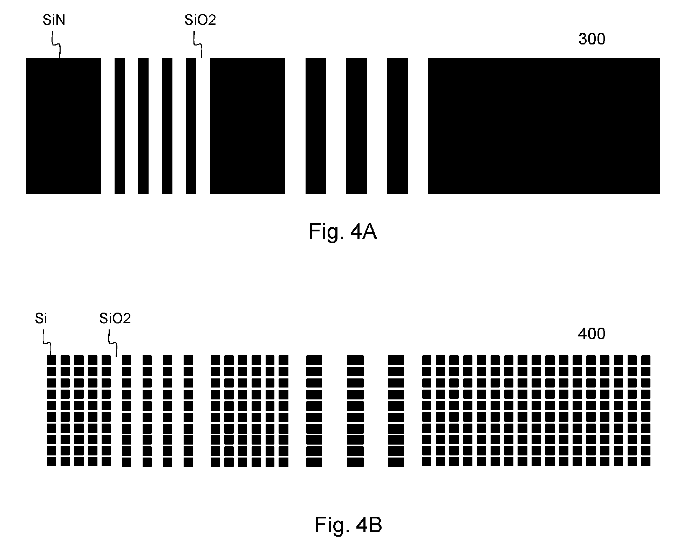

United States Patent Application US 2002/0192849 entitled "Low Diode Feedback" mentions vertical coupling but in fact discloses a device that couples light out of an integrated waveguide under an angle substantially different from 90 degrees, even up to 45 degrees (see for instance US 2002/0192849, page 1, rightmost column, lines 5-8). The out-of-plane coupling in US 2002/0192849 is realized through a first order shaped grating with fingers having varying lengths or varying depths. As is illustrated by Fig. 4, Fig. 5, Fig. 6, Fig. 7, Fig. 8 and Fig. 9, a shallow etch is required to realize such grating, hence suffering from disadvantages that are similar to the ones listed for the closest prior art solution known from D. Taillaert et al.

International Patent Application WO 2004/051327 entitled "Optical Via For Three Dimensional Interconnection" describes perpendicular coupling of light coming from a VCSEL into an integrated waveguide with improved coupling efficiency. Although the coupling is perpendicular, i.e. realizing an angle of 90 degrees, the device does not use a diffraction grating but a redirection device or mirror, and a taper. This technology is completely different from a diffraction grating, using a much larger, probably polymer structure.

European Patent Application EP 1855131 entitled "Slanted segmented grating coupler" provides "a compact slanted grating coupler for coupling a radiation beam between a waveguide core and an optical element, wherein the grating coupler has a good coupling efficiency for medium or low index contrast material systems and wherein the fabrication conditions are relaxed" (p. 3, column 3, I. 49). However, D3 does not address perpendicular out-of-plane coupling with reduced coupling loss, as the "optical element may be oriented at an angle with respect to the orthogonal to the waveguide plane, for example at an angle of less than 30°, for example an angle between 8° and 12°".

It is an objective of the present invention to disclose a diffractive coupling grating device for perpendicular out-of-plane coupling of light based on a second order coupling grating, phase delay section, and reflector grating, but which overcomes the above mentioned disadvantages of the best existing solution. In particular, it is an objective to realize such diffractive coupling grating device thereby avoiding difficulties and inefficiencies resulting from a poor etch depth control and/or a poor control on the length of the phase delay section. It is a further objective to realize such a diffractive coupling grating device with improved coupling efficiency, i.e. achieving a coupling efficiency above 50 %.

### Summary of the Invention

According to the present invention, the above defined objectives are realized by a diffractive coupling grating as defined by claim 1, for perpendicular, out-of-plane coupling of light between an integrated waveguide and an optical receiver/optical transmitter.

Thus, the invention relies on the insight that when the effective refractive index of the material in the waveguide core layer is reduced to a value in the range from 1.8 to 2.4, it becomes possible to devise a process wherein the second order grating fingers can be etched all the way through the waveguide core layer. This way, etch depth is eliminated as a process variable, and evidently also the difficulties in controlling the etch depth. After etching, a material with a lower refractive index is deposited, e.g. silicon oxide or SiO₂ with a refractive index of 1.45, that fills the etched fingers and forms an upper cladding layer on the waveguide. As a consequence, the second order coupling grating and the reflector grating can be realized using a single mask, which further eliminates the difficulties in controlling the distance between the second order grating and the reflector grating, i.e. the length of the phase delay section.

In a further example, silicon nitride is used as material with reduced effective refractive index.

Indeed, one way to reduce the effective refractive index of the material to eliminate the need for a shallow etch process consists in using Si3N4 or silicon nitride as material for the waveguide core layer.

As a part of the invention, the way for reducing the effective refractive index of the material consists in using sub-wavelength periodic structures. Using this technique, the effective refractive index of silicon can be reduced from around 3.48 to less than 2.4. The technique is described in more detail in the article "Subwavelength Grating Periodic Structures in Silicon-on-Insulator: a New Type of Microphotonic Waveguide" from the authors Przemek J. Bock, Pavel Cheben, Jens H. Schmid, Jean Lapointe, André Delâge, Siegfried Janz, Geof C. aers, Dan-Xia Xu, Adam Densmore and Trevor J. Hall. This article was published on 13 September 2010 in Optics Express, Vol. 18, No. 19.

It is noticed that the effective refractive index of the material used for the waveguide core layer should not be confused with the effective index of a waveguide mode, which is also dependent on the core layer thickness and the refractive index of the cladding layers. In case of a plain material without sub-wavelength structures, the effective refractive index corresponds to the refractive index of the material itself. In case of an engineered material like for instance silicon, whose refractive index is 3.48, with sub-wavelength holes filled with silicon dioxide, whose refractive index is 1.45, the effective refractive index of the engineered material will be in between the refractive index of silicon and the refractive index of silicon dioxide.

### Brief Description of the Drawings

Fig. 1 illustrates a traditional diffractive coupling grating device 100 as known from the prior art;
Fig. 2 illustrates a diffractive coupling grating device 200 with second order coupling grating, phase delay section and reflector grating as known from the closest prior art;
Fig. 3 illustrates a first example 300 of a diffractive coupling grating device.
Fig. 4A and Fig. 4B are top views of respectively the example 300 and an embodiment 400 of the diffractive coupling grating device according to the invention; and
Fig. 5 shows a graph 500 illustrating the simulated efficiency of an embodiment of the diffractive coupling grating according to the present invention. **Detailed Description of Embodiment**(**s**)

Fig. 1 shows a traditional diffractive coupling grating 100 consisting of etch through fingers 101 in a waveguide layer 104 that is typically integrated in a multilayer photonic device. Incident light 110, travelling through the waveguide layer 104 is out-of-plane coupled by the diffractive coupling grating. With such traditional diffractive coupling grating 100 it is not possible to realize a perfect perpendicular out-of-plane coupling with high efficiency. Because of symmetry reasons, the efficiency cannot be higher than 50 % in the case of perfect perpendicular coupling. In other words, the outgoing light 111 does not travel in a direction that forms an angle of 90 degrees with the propagation direction of the light 110 in the planar waveguide 104. In many applications however, e.g. the coupling of light between a VCSEL and an integrated waveguide, or the coupling of light between an integrated waveguide and an optical fibre positioned perpendicular to the planar waveguide, a perfect perpendicular coupling with high efficiency is desired.

Fig. 2 shows a diffractive coupling grating 200 that couples light 210 travelling through an integrated planar waveguide 204 out-of-plane to travel in a direction 211 perpendicular to the planar waveguide. The diffractive coupling grating 200 consists of a second order coupling grating 201, a phase delay section 202 and a reflector grating 203. As explained already above, the tolerances on the length of the phase delay section are tight, requiring the second order coupling grating 201 and the reflector grating 203 to be manufactured using a single mask. The second order coupling grating 201 requires a shallow etch to avoid back reflections when the material of the waveguide core 204 is silicon with an effective refractive index of 3.48. As a consequence, both the second order coupling grating 201 and the reflector grating 203 must be manufactured through a single shallow etch step. Such shallow etch step however poses difficulties in controlling the etch depth, a parameter that will determine efficiency and direction of the out-of-plane coupling. A diffractive coupling grating as shown in Fig. 2 in other words cannot be mass-manufactured reliably for highly efficient perpendicular coupling.

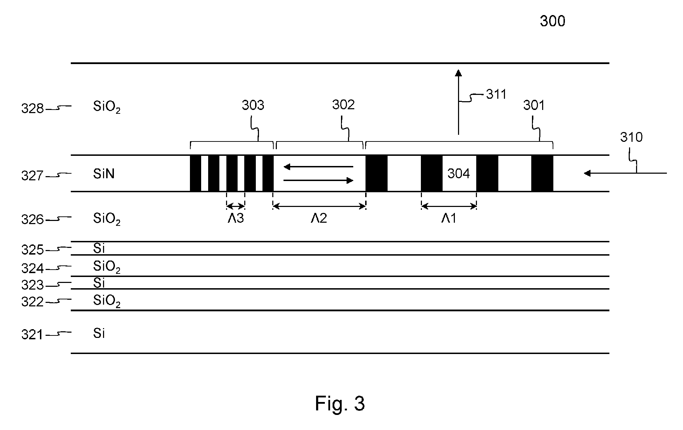

Fig. 3 shows an example of a diffractive coupling grating 300. Just like the grating drawn in Fig. 2, the diffractive coupling grating 300 consists of a second order coupling grating 301, a phase delay section 302 and a reflector grating 303, all manufactured in a planar waveguide integrated in a layer 327 of silicon nitride material, 304 or SiN, with effective refractive index between 1.8 and 2.4. Thanks to the material 304 with reduced effective refractive index, the second order coupling grating 301 can be realized with fingers that are etched all the way through the waveguide core layer 327. The second order coupling grating 301 and the reflector grating 303 are realized using a single mask. As a consequence, the parameters that determine the perpendicular direction of the out-of-plane coupling and the efficiency of the coupling, i.e. the grating pitch Λ1 of the second order coupling grating 301, the length Λ2 of the phase delay section 302 and the pitch Λ3 of the reflector grating 303 can be controlled sufficiently accurately to yield a highly efficient, perfectly perpendicular coupling. The etch depth of the fingers constituting the second order coupling grating 301 is eliminated as a parameter since a single etch-through process can be used. Thanks to the material with reduced effective refractive index, back reflections are avoided.

Fig. 3 shows the light 311 travelling through an uppercladding silicon oxide (SiO₂) layer 328 in a direction perfectly perpendicular to the propagation direction 310 of light in the waveguide core layer 327. Fig. 3 further shows a number of undercladding layers, alternatingly made out of silicon Si and silicon oxide Si02. These undercladding layers, 321, 322, 323, 324, 325 and 326, form a distributed Bragg reflector, mirroring the light to minimize losses in a substrate and further increase the efficiency of the coupling device 300.

It is noticed that as an alternative to silicon nitride SiN, any other waveguide material with effective refractive index between 1.8 and 2.4 could be used to realize variant embodiments for the one shown in Fig. 3. One example of such material is an engineered material made from silicon whose effective refractive index around 3.48 is reduced to less than 2.4 by using sub-wavelength periodic structures as described in literature already cited here above. Fig. 4B shows a top view of an embodiment 400 of the device according to the present invention wherein the waveguide core layer material is engineered from silicon or Si with sub-wavelength holes filled with silicon dioxide or Si02. The refractive index of silicon is 3.48 whereas the refractive index of silicon dioxide is 1.45. The material is engineered to have an effective refractive index in the range of 1.8 to 2.4. In comparison, Fig. 4A shows a top view of the above described example 300 with silicon nitride or SiN as material for the waveguide core layer and silicon dioxide or SiO2 filling the etched fingers as an upper cladding layer on the waveguide.

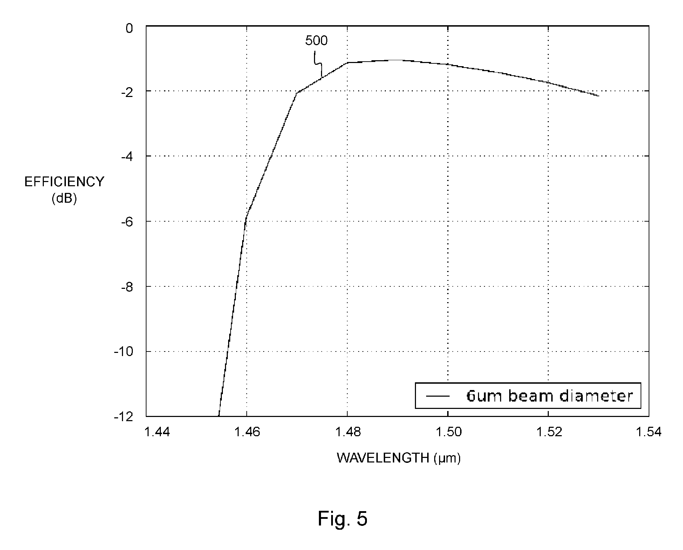

Fig. 5 shows the simulated coupling losses 500 for a perfectly perpendicular diffractive coupling grating according to the present invention. The diffractive coupling grating is designed for a specific wavelength and it has a certain bandwidth with acceptably high coupling before the efficiency drops dramatically. In this specific example, the grating is designed for 1500 nm wavelength, and the thickness of the nitride layer 327 is 400 nm. The parameters Λ1, Λ2 and Λ3 are 950 nm, 830 nm and 470 nm respectively. The second order coupling grating 301 has 7 periods and reflector grating 303 has 16 periods. As can be seen from Fig. 5, losses of less than 3 dB are achieved in the simulation for wavelengths between 1.47 and 1.53 micron and a 6 micron beam diameter. This beam diameter is a typical value for a commercially available single-mode VCSEL emitting light with a wavelength of 1500 nm. Since a 3 dB loss corresponds with an efficiency of 50 %, the diffractive coupling grating according to the present invention enables to achieve perfect perpendicular coupling with an efficiency above 50% within the bandwidth where it is designed for.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A diffractive coupling grating (300) for perpendicular, out-of-plane coupling of light between an integrated waveguide comprising a core layer and an optical receiver/optical transmitter,
said integrated waveguide having a first direction (310) and said light having between said integrated waveguide and said optical receiver/optical transmitter a second direction (311) substantially perpendicular to said first direction (310), said diffractive coupling grating comprising a second order coupling grating (301), a phase delay section (302) and a reflector grating (303),
**CHARACTERISED IN THAT**
- said diffractive coupling grating is manufactured in a layer of material (304) forming the core layer with effective refractive index in a range between 1.8 and 2.4,
- said second order coupling grating (301) and said reflector grating (303) consist of fingers having been manufactured by etching through the core layer using a single mask and filling the fingers with silicon dioxide,
and
- said material (304) is silicon whose effective refractive index has been reduced below 2.4 through a sub-wavelength periodic structure technique,

## Patentansprüche

1. Beugungskopplungsgitter (300) zur senkrechten Außerebenenkopplung von Licht zwischen einem integrierten Wellenleiter mit einer Kernschicht und einem optischen Empfänger/optischen Sender,
wobei der integrierte Wellenleiter eine erste Richtung (310) aufweist und das Licht zwischen dem integrierten Wellenleiter und dem optischen Empfänger/optischen Sender eine im Wesentlichen zu der ersten Richtung (310) senkrechte zweite Richtung (311) aufweist, wobei das Beugungskopplungsgitter ein Kopplungsgitter (301) zweiter Ordnung, einen Phasenverzögerungsteil (302) und ein Reflektorgitter (303) umfasst,
**dadurch gekennzeichnet, dass**
- das Beugungskopplungsgitter in einer die Kernschicht bildenden Schicht aus Material (304) mit effektivem Beugungsindex in einem Bereich zwischen 1,8 und 2,4 hergestellt ist,
- das Kopplungsgitter (301) zweiter Ordnung und das Reflektorgitter (303) aus Fingern bestehen, die durch Ätzen durch die Kernschicht unter Verwendung einer einzigen Maske und Füllen der Finger mit Silziumdioxid hergestellt wurden, und
- das Material (304) Silizium ist, dessen effektiver Brechungsindex mittels einer periodischen Strukturtechnik auf Subwellenlänge auf weniger als 2,4 verringert wurde.

## Revendications

1. Réseau de couplage par diffraction (300) pour le couplage perpendiculaire hors plan de la lumière entre un guide d'onde intégré comprenant une couche centrale et un récepteur optique/émetteur optique,
ledit guide d'onde intégré ayant une première direction (310) et ladite lumière ayant, entre ledit guide d'onde intégré et ledit récepteur optique/émetteur optique, une deuxième direction (311) substantiellement perpendiculaire à ladite première direction (310), ledit réseau de couplage par diffraction comprenant un réseau de couplage de deuxième ordre (301), une section à retard de phase (302) et un réseau réflecteur (303),
**caractérisé en ce que**
- ledit réseau de couplage par diffraction est fabriqué dans une couche de matériau (304) formant la couche centrale, avec un indice de réfraction efficace dans une plage comprise entre 1,8 et 2,4,
- ledit réseau de couplage de deuxième ordre (301) et ledit réseau réflecteur (303) sont constitués de doigts ayant été fabriqués par gravure à travers la couche centrale en utilisant un masque unique et en remplissant les doigts avec du dioxyde de silicium, et
- ledit matériau (304) est un silicium dont l'indice de réfraction efficace a été réduit à moins de 2,4 par une technique de structures de sous-longueurs d'ondes périodiques.
